# EUROPEAN PATENT APPLICATION

(11) **EP 3 046 236 A1**
(43) Date of publication of application: **20.07.2016**
(21) Application number: 15179212.4
(22) Date of filing: 31.07.2015
(51) Int. Cl.: H02K 21/14, H02K 29/06, H02K 7/102, H02K 11/21, B25J 9/10, B25J 19/00, H02K 7/116

(54) **ELECTRIC ROTATING MACHINE**

(30) Priority: 15.01.2015 JP 2015005645
(71) Applicant: Kabushiki Kaisha Yaskawa Denki, Kitakyushu-shi, Fukuoka 806-0004 (JP)
(72) Inventor: Tominaga, Ryuichiro, Kitakyushu-shi, Fukuoka 806-0004 (JP); Kitani, Fumihiko, Kitakyushu-shi, Fukuoka 806-0004 (JP); Ichibangase, Atsushi, Kitakyushu-shi, Fukuoka 806-0004 (JP)
(74) Representative: Grünecker Patent- und Rechtsanwälte PartG mbB

(57) **Abstract**

An electric rotating machine 20 includes electric rotating machine bodies 40, 50 that cause a rotating body 42 to rotate around an output axis Ax, a rotation detecting device 60 that detects rotation of the rotating body 42, and a braking device 70 that stops rotation of the rotating body 42. The rotation detecting device 60 includes a rotating portion 64 that rotates in association with the rotating body 42. The rotating portion 64 is arranged coaxially with the output axis Ax. The braking device 70 is arranged at a position shifted from the output axis Ax of the rotating body 42.

## Description

### BACKGROUND

### 1. Field

The present disclosure relates to an electric rotating machine.

### 2. Description of the Related Art

In JP 2014-151412 A, a motor that includes a first unit, a second unit, and a power transmission unit is disclosed. In the first unit, a motor portion and a speed reducer portion are coaxially arranged on a first shaft having a hollow structure. In the second unit, a brake portion and an encoder portion are coaxially arranged on a second shaft that is separated from and independent of the first shaft. The first unit and the second unit are connected by a power transmission unit.

### SUMMARY

In such a motor of the past, the motor portion and the speed reducer portion are arranged on the shaft different from that for the brake portion and the encoder portion. The motor can be smaller (thinner) in the axial direction, compared to a motor having a structure in which individual parts are arranged on the same shaft. In the motor of the past, however, the motor portion and the encoder portion are connected via the power transmission portion, such that the encoder portion is likely to be influenced by disturbance or the like. In the motor of the past, therefore, there is room for further improvement in detection accuracy of a rotating body of the motor portion.

An object of the present disclosure is to provide an electric rotating machine capable of accurately detecting rotation of the rotating body, while compacting the size thereof.

An electric rotating machine according to an aspect of the present disclosure includes an electric rotating machine body that causes a rotating body to rotate around an axis, a rotation detecting device that detects rotation of the rotating body, and a braking device that decreases a speed of the rotation of the rotating body. The rotation detecting device includes a rotating portion that rotates in association with the rotating body. The rotating body is arranged coaxially with the axis. The braking device is arranged at a position shifted from the axis of the rotating body.

According to the present disclosure, the rotation of the rotating body can be detected accurately, while the size of the rotating body is decreased.

### BRIEF DESCRIPTION OF THE DRAWINGS

FIG. 1 is a perspective view illustrating a robot to which an electric rotating machine according to an embodiment is installed;
FIG. 2 is a perspective view illustrating an appearance of the electric rotating machine;
FIG. 3 illustrates a cross-sectional structure of the electric rotating machine of FIG. 2;
FIG. 4 illustrates a cross-sectional structure of an electric rotating machine according to another embodiment;
FIG. 5 is a cross-sectional view used to explain an operation of the electric rotating machine illustrated in FIG. 4; and
FIG. 6 is a cross-sectional view illustrating a variation of the electric rotating machine.

### DETAILED DESCRIPTION

An embodiment will be described in detail below by referring to the accompanying drawings. In the description of the drawings, the same reference signs are given to the same or similar elements, and the description thereof will not be repeated.

### [Robot Structure]

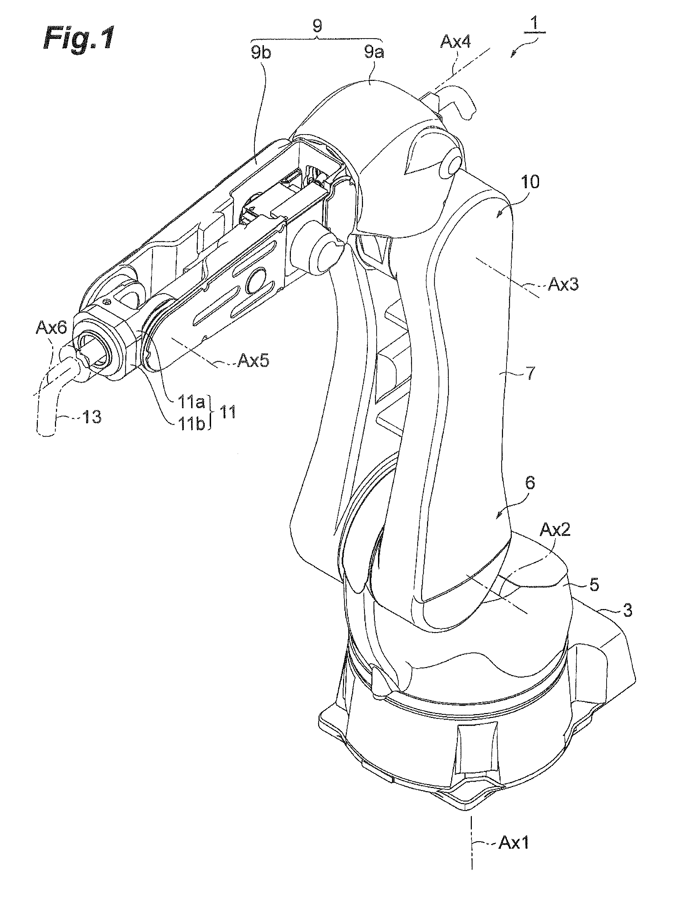

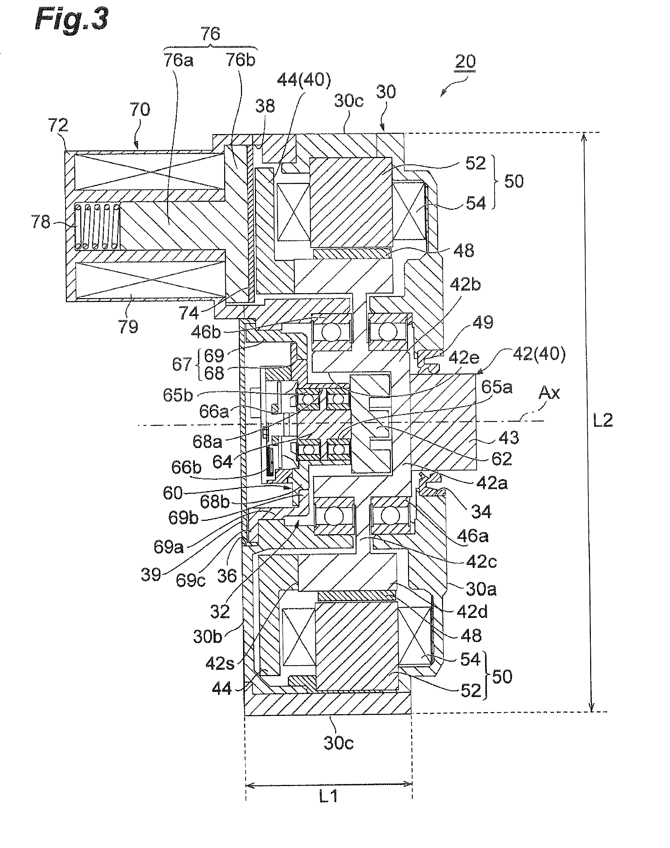

FIG. 1 is a perspective view illustrating a robot to which an electric rotating machine according to an embodiment is installed. A robot 1 illustrated in FIG. 1 is an industrial robot driven by a motor 20 (see FIG. 3), which acts as the electric rotating machine according to the present embodiment, to apply processing to a work which is not illustrated. In the present embodiment, a welding robot that performs arc welding on an object to be welded, such as a body of a vehicle, will be described as an example of the robot 1. In the present embodiment, the electric rotating machine used as an electric motor (motor) to drive a robot will be described as an example, but the electric rotating machine may also be used as a power generator.

As illustrated in FIG. 1, the robot 1 includes a base 3, a turning portion 5, a first arm 7, a second arm 9, an end base 11, and a welding torch 13. The base 3, the turning portion 5, the first arm 7, the second arm 9, and the end base 11 are connected in this order from the base end toward the tip end of the robot 1.

The base 3 is fixed on an installing surface to support the entire robot 1.

The turning portion 5 is provided on the base 3. The turning portion 5 can turn around a first axis Ax1 relative to the base 3, with the first axis Ax1 being a turning axis extending in a vertical direction. The turning portion 5 is driven by a first motor stored in the turning portion 5 as a power source, and turns around the first axis Ax1. The first axis Ax1 may also be referred to as an S-axis.

A first arm 7 can swing around a second axis Ax2 relative to the turning portion 5, with the second axis Ax2 being a swinging axis running through a connecting portion 6 (end portion of the first arm 7 on the side of the turning portion 5) between the turning portion 5 and the first arm 7. A second motor is installed at the connecting portion 6 between the turning portion 5 and the first arm 7. The first arm 7 is driven by the second motor as a power source, and swings around the second axis Ax2. The second axis Ax2 may also be referred to as an L-axis.

The second arm 9 includes a base end portion 9a located on the side of the first ann 7 and a tip end portion 9b located on the side of the end base 11. The base end portion 9a can swing around a third axis Ax3 relative to the first arm 7, with the third axis Ax3 being a swinging axis running through a connecting portion 10 (end portion of the first arm 7 on the side of the base end portion 9a) between the first arm 7 and the second arm 9. Therefore, the second arm 9, on the whole, can also swing around the third axis Ax3 relative to the first arm 7. A third motor is installed at a connecting portion 10 between the first arm 7 and the second arm 9. The second arm 9 (the base end portion 9a) is driven by the third motor as a power source, and swings around the third axis Ax3. The third axis Ax3 extends in parallel with the second axis Ax2. The third axis Ax3 may also be referred to as an U-axis.

The tip end portion 9b can turn around a fourth axis Ax4 relative to the base end portion 9a, with the fourth axis Ax4 being a turning axis running through the center of the second arm 9. The tip end portion 9b is driven by the fourth motor as a power source, and turns around the fourth axis Ax4. The fourth axis Ax4 may also be referred to as an R-axis.

The end base 11 includes a base end portion 11 a located on the side of the second arm 9 and a tip end portion 11b located on the side of the tip end. The base end portion 11 a can swing around a fifth axis Ax5 relative to the tip end portion 9b, with the fifth axis Ax5 being as a swinging axis running through a connecting portion between the second arm 9 (the tip end portion 9b) and the end base 11 (the base end portion 11 a). The base end portion 11 a is driven by a fifth motor as a power source, and swings around the fifth axis Ax5. The fifth axis Ax5 may also be referred to as an B-axis.

The tip end portion 11b is rotatably attached around a sixth axis Ax6, with the sixth axis Ax6 being as a rotational axis running through the center of the end base 11 relative to the base end portion 11 a. The tip end portion 11b is driven by the sixth motor as a power source, and rotates around the sixth axis Ax6. The sixth axis Ax6 may also be referred to as an T-axis.

The welding torch 13 is a kind of end effectors and arranged at the tip end portion 11b. At the tip end of the welding torch 13, a contact chip for supplying an electric current to a welding wire, and an orifice for supplying a shielding gas used for arc shielding, etc. are provided. The welding torch 13 may be removably attached to the tip end portion 11b, or formed integrally therewith. That is, the tip end portion 11b (end base 11) is formed to hold the welding torch 13 (end effector).

### [Structure of Motor] (First Embodiment)

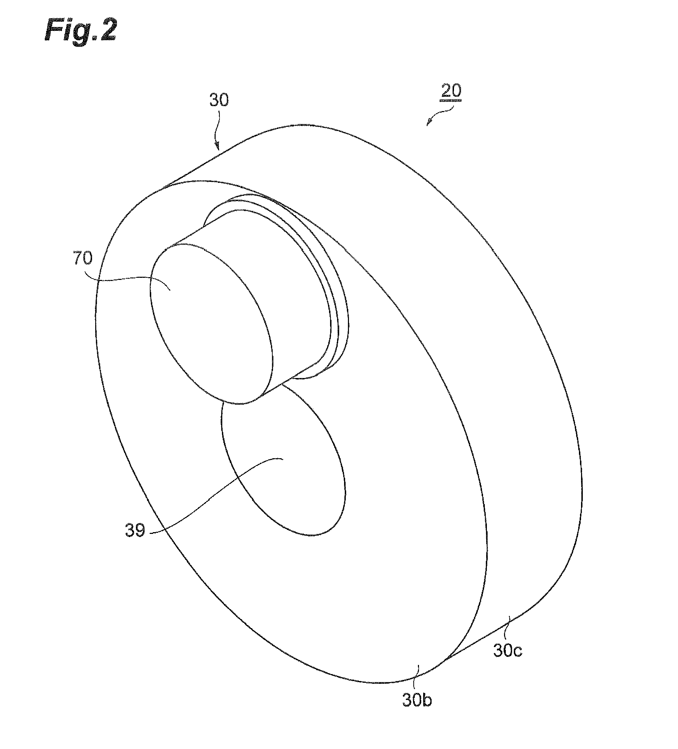

Next, motors (first to sixth motors) mounted on the above-described robot 1 will be described in detail. FIG 2 is a perspective view illustrating the appearance of a motor. FIG. 3 illustrates a cross-sectional structure of the motor illustrated in FIG. 2. As illustrated in FIGS. 2 and 3, a motor 20 includes a casing (housing) 30, a rotor (the electric rotating machine body) 40, a stator (the electric rotating machine body) 50, an encoder (rotation detecting device) 60, and a brake (braking device) 70.

The casing 30 holds the rotor 40, the stator 50, the encoder 60, and the brake 70. The external shape of the casing 30 is, for example, circular. The casing 30 has a first surface 30a and a second surface 30b, which orthogonally cross an output axis Ax of the motor 20, and a third surface 30c extending along the output axis Ax and having a cylindrical shape. The casing 30 is flat and expands toward a direction orthogonal to the output axis Ax. Specifically, a length measurement of the casing 30 in a direction along the output axis Ax of the motor 20 is smaller than a length measurement of the casing 30 in a direction approximately vertically to the output axis Ax. That is, a length measurement L1 of the casing 30 between the first surface 30a and the second surface 30b is smaller than a length measurement L2 equivalent to the diameter of the third surface 30c (L1 < L2). As an example, the length measurement L1 of the present embodiment is set equal to or smaller than 1/2 of the length measurement L2.

The casing 30 includes a storage portion 32, a first opening 34, a second opening 36, a third opening 38, and a cover (lid) 39. The storage portion 32 includes space formed in the casing 30 to store the rotor 40, the stator 50, and the encoder 60.

The first opening 34 is opened in the first surface 30a. The first opening 34 is in communication with the interior of the storage portion 32. The first opening 34 is provided at a position including the output axis Ax. The second opening 36 is opened in the second surface 30b. The second opening 36 is in communication with the interior of the storage portion 32. The second opening 36 is provided at a position including the output axis Ax and located opposite to the first opening 34. The third opening 38 is opened in the second surface 30b. The third opening 38 is in communication with the interior of the storage portion 32. In the second surface 30b, the third opening 38 is provided on the outer peripheral side compared to the second opening 36.

The cover 39 closes the second opening 36. The cover 39 is configured to be removable in the casing 30. The cover 39 is fixed to the casing 30 with a screw, for example, which is not illustrated.

The rotor 40 includes a rotating body 42 and a brake pad (first abutting portion) 44. The rotating body 42 is a member driven to rotate around the output axis Ax. The rotating body 42 includes a first portion 42a, a second portion 42b, a third portion 42c, and a fourth portion 42d.

The first portion 42a is disc-shaped. The second portion 42b is cylindrical. One end portion (on the side of the first surface 30a) of the second portion 42b along the output axis Ax is coupled to an outer periphery of the first portion 42a. A recess 42e is formed in the rotating body 42 by the first and second portions 42a, 42b. The third portion 42c is annular. The third portion 42c is coupled to an outer peripheral surface of the second portion 42b and projects outward from the outer peripheral surface of the second portion 42b in a radial direction. The fourth portion 42d is annular. The fourth portion 42d is coupled to the outer periphery of the third portion 42c. That is, the fourth portion 42d is connected to the second portion 42b via the third portion 42c. A thickness measurement of the fourth portion 42d in the direction along the output axis Ax is larger than the thickness measurement of the third portion 42c.

The rotating body 42 is configured to be rotatable by annular bearings 46a, 46b that are fixed in the casing 30. Specifically, the second portion 42b of the rotating body 42 is supported by the two bearings 46a, 46b. The bearings 46a, 46b are arranged at a predetermined interval in the direction of the output axis Ax to sandwich the third portion 42c. A magnet 48 is arranged along the circumferential direction of the fourth portion 42d on the outer circumferential surface of the fourth portion 42d.

The rotating body 42 has a shaft member 43. The shaft member 43 is provided at the first portion 42a. The shaft member 43 is located at the first opening 34 and projects from the first surface 30a of the casing 30. A sealing material 49 is provided between the first opening 34 and the shaft member 43.

The brake pad 44 is a member that is subjected to braking by the brake 70. The brake pad 44 is provided on the periphery of the rotating body 42. Specifically, the brake pad 44 is coupled to an end surface 42s of the fourth portion 42d on the side of the second surface 30b. The brake pad 44 is annular. The brake pad 44 is arranged coaxially with the output axis Ax. The outer periphery of the brake pad 44 is located outside beyond the outer periphery of the fourth portion 42d. That is, the outer diameter of the brake pad 44 is larger than the outer diameter of the rotating body 42. The outer peripheral portion of the brake pad 44 is located over the third opening 38. The brake pad 44 is made of, for example, metal.

The stator 50 is a member that provides rotational force to the rotor 40. The stator 50 includes a core 52 and a coil 54. The core 52 is, for example, annular. The core 52 is located at a position facing the outer peripheral surface of the fourth portion 42d of the rotating body 42. The coil 54 is provided on the core 52.

The encoder 60 is a rotation detecting device that detects rotation of the rotor 40. The encoder 60 is, for example, a rotary encoder capable of detecting a driving amount of the motor 20, such as a number, an angle, and/or a speed of rotations of the rotor 40. The encoder 60 includes a coupling portion (connecting portion) 62, a rotating portion 64, a detecting portion 66, and a holder (holding portion) 67.

The coupling portion 62 couples the rotating body 42 of the rotor 40 with the rotating portion 64. The coupling portion 62 is arranged inside the recess 42e of the rotating body 42 and is coupled to the first portion 42a. Movement of the coupling portion 62 toward the rotational direction of the rotating body 42 is limited, while movement toward the direction along the output axis Ax is allowed. An Oldham's coupling, for example, may be adopted as the coupling portion 62.

The rotating portion 64 rotates in association with the rotating body 42. One end of the rotating portion 64 is coupled to the coupling portion 62. Thus, the rotating portion 64 is connected to the rotating body 42 via the coupling portion 62, and rotates in synchronization with the rotating body 42. The tip end side of the rotating portion 64 is located inside the recess 42e of the rotating body 42. The rotating portion 64 is configured to be rotatable by the annular bearings 65a, 65b. The bearings 65a, 65b are arranged at a predetermined interval in the direction along the output axis Ax.

The detecting portion 66 includes a detected portion 66a that rotates according to the rotation of the rotating body 42, and also includes a detecting element 66b that detects the detected portion 66a. The detected portion 66a is coupled to the rotating portion 64 and rotates in synchronization with the rotating portion 64 (rotating body 42). The detecting element 66b is, for example, a light projecting/receiving sensor. The detecting portion 66 detects rotation of the detected portion 66a by the detecting element 66b to detect the driving amount of the motor 20, such as the number, the angle, and/or the speed of rotations of the rotor 40.

The holder 67 holds the coupling portion 62, the rotating portion 64, and the detecting portion 66. The holder 67 includes a first holder 68 and a second holder 69.

The first holder 68 has a first portion 68a and a second portion 68b. The first portion 68a is cylindrical. The first portion 68a is arranged such that the central axis thereof coincides with the output axis Ax. The 65a, 65b are fixed on the inner peripheral surface of the first portion 68a. Thus, the first portion 68a holds the rotating portion 64 supported by the bearings 65a, 65b and the coupling portion 62 coupled to the rotating portion 64. The second portion 68b is annular. The second portion 68b is provided at one end portion (on the side of the second surface 30b of the casing 30) of the first portion 68a, and projects toward outside from the outer peripheral surface of the first portion 68a in the radial direction of the first portion 68a. The second portion 68b supports the detecting portion 66.

The second holder 69 holds the first holder 68. The second holder 69 includes a first portion 69a, a second portion 69b, and a third portion 69c. The first portion 69a is cylindrical. The first portion 69a is arranged such that the central axis thereof coincides with the output axis Ax. The second portion 69b is annular. The second portion 69b is provided at one end portion (on the side of the first surface 30a of the casing 30) of the first portion 69a, and projects toward inside from the inner peripheral surface of the first portion 69a in the radial direction of the first portion 69a. The second portion 69b supports the second portion 68b of the first holder 68. Specifically, the second portion 68b of the first holder 68 is fixed to the second portion 69b with a screw or the like which is not illustrated.

The third portion 69c is annular. The third portion 69c is provided at the other end portion (on the side of the second surface 30b of the casing 30) of the first portion 69a, and projects toward outside from the outer peripheral surface of the first portion 69a in the radial direction of the first portion 69a. The third portion 69c is fixed on the casing 30. Specifically, the third portion 69c is fixed to the casing 30 with a screw or the like.

The encoder 60 having the above-described structure is provided as a unit. In the encoder 60, individual components are held integrally by the holder 67. The encoder 60 can be removed from and installed on the casing 30.

The brake 70 is a braking device that brakes rotation of the rotor 40. The brake 70 projects toward outside from the second surface 30b of the casing 30 along the output axis Ax. The brake 70 is arranged at an eccentric position relative to the output axis Ax. Specifically, the brake 70 is arranged at a third opening 38 of the casing 30. The brake 70 includes a case 72, a frictional material (second abutting portion) 74, a holding member 76, an energizing member (driving portion) 78, and a coil (driving portion) 79.

The case 72 stores the holding member 76, the energizing member 78, and the coil 79. The case 72 is fixed to the casing 30 with a screw or the like. The external shape of the case 72 is, for example, a column-shaped, as illustrated in FIG. 2. The shape of the case 72 may be set appropriately according to the designs.

The frictional material 74 provides frictional force to the brake pad 44 by slidably contacting (abutting) the brake pad 44 of the rotor 40. The frictional material 74 is provided on the holding member 76. The frictional material 74 may be made by using, for example, a resin mold, a semi-metallic material, or a sintered alloy (iron-based, copper-based).

The holding member 76 holds the frictional material 74. The holding member 76 is made of, for example, metal. The holding member 76 is approximately T-shaped when seen from the side. The holding member 76 includes a body portion 76a and a holding portion 76b.

The body portion 76a is, for example, column-shaped. The body portion 76a extends in the direction along the output axis Ax. The holding portion 76b is, for example, disc-shaped. The holding portion 76b is provided at one end portion (of the location near the brake pad 44) of the body portion 76a. The outer diameter of the holding portion 76b is larger than the outer diameter of the body portion 76a. The holding portion 76b faces the brake pad 44 of the rotor 40. That is, the frictional material 74 faces the brake pad 44.

The holding member 76 is movably (slidably) provided in the direction along the output axis Ax. Specifically, the holding member 76 is provided in a movable manner between a first position (initial position) where the holding portion 76b abuts on the coil 79 and a second position where the frictional material 74 slidably contacts the brake pad 44.

The energizing member 78 energizes the holding member 76.

The energizing member 78 is, for example, a coil spring. The energizing member 78 is arranged at the other end portion of the body portion 76a of the holding member 76. The energizing member 78 energizes the holding member 76 toward the side of the rotor 40 when the holding member 76 is in the first position.

The coil 79 controls the movement of the holding member 76. The coil 79 is arranged to surround the circumference of the body portion 76a of the holding member 76. While the electric current is supplied, the coil 79 applies electromagnetic force, which opposes the energizing force of the energizing member 78, to hold the holding member 76 at the first position by drawing the holding portion 76b. When the electric current is not supplied, the coil 79 releases holding of the holding member 76.

Once the current supply to the coil 79 is stopped, the brake 70 of the above-described structure releases holding of the holding member 76 by the coil 79 and moves the holding member 76 toward the side of the rotor 40 by the energizing force of the energizing member 78. That is, the holding member 76 is set in a second position. Then the frictional material 74 is made to be slidably in contact with the brake pad 44 by the brake 70 to provide frictional force to the brake pad 44. Thus, the rotor 40, which is in a rotating state, reduces its speed or stops and, at the same time, the rotation of the rotor 40, which is in a stationary state, is restricted.

When the current supply to the coil 79 is started, the brake 70 separates the brake pad 44 from the frictional material 74 by drawing the holding member 76 in the coil 79. That is, the holding member 76 is brought to be located in the first position. As a result, the rotor 40 becomes rotatable.

As described above, the motor 20 according to the present embodiment can directly detect the rotation of the rotating portion 64 by the encoder 60, without providing a power transmission member, such as a gear, by arranging the rotating portion 64 of the encoder 60 coaxially with the output axis Ax of the rotating body 42. Therefore, the influence of disturbance or the like can be restricted and a detection accuracy of the encoder 60 can be improved. Further, in the motor 20, by arranging the brake 70 at a position shifted from the rotating body 42 (offset arrangement), a smaller (thinner) device can be provided in the direction along the output axis Ax, compared to the structure in which the components are arranged on the same axis.

In the present embodiment, the brake pad 44 is provided coaxially with the output axis Ax in the rotating body 42. The brake 70 includes the frictional material 74 that provides the frictional force to the brake pad 44 by slidably contacting the brake pad 44, and the coil 79 that drives the holding member 76 in which the frictional material 74 is provided. By such a structure, the brake 70 can be constituted in a simplified structure.

In the present embodiment, the brake pad 44 is arranged at the periphery (the fourth portion 42d) of the rotating body 42, and the brake 70 is arranged at a position corresponding to the periphery. By such a structure, the frictional material 74 becomes slidably in contact with the brake pad 44 on the periphery of the rotating body 42, such that a smaller load is applied to the brake pad 44 to stop the rotating body 42 (i.e., a larger frictional torque can be obtained with a smaller load), compared to the structure in which the brake pad 44 is arranged inside the rotating body 42. Accordingly, the brake 70 can be made smaller, and as a result, the motor 20 can also be made smaller. Since the brake 70 is arranged at a position corresponding to the periphery, the brake 70 is arranged biased to the periphery side of the motor 20. As a result, space is formed in a portion other than the brake 70, and such space can be used for wiring or the like, when the motor 20 is installed on a device.

In the present embodiment, the rotating body 42 includes the recess 42e formed at the position including the output axis Ax, and at least part of the encoder 60 is located in the recess 42e. In this way, by locating at least part of the encoder 60 in the recess 42e, the motor 20 can be made even smaller in the direction along the output axis Ax.

The present embodiment includes the casing 30 in which the rotor 40, the stator 50, the encoder 60, and the brake 70 are held. The encoder 60 includes the coupling portion 62 and the holder 67 that holds the rotating portion 64. The coupling portion 62 couples the rotating portion 64 to the rotating body 42, while limiting the movement of the rotating body 42 in the rotating direction and allowing the movement in the direction of the output axis Ax. The holder 67 is removably installed on the casing 30. By such a structure, the encoder 60 can be installed and removed easily relative to the casing 30 by moving the encoder 60 along the output axis Ax. Accordingly, the replacement or maintenance of the encoder 60 can be performed easily.

In the present embodiment, the casing 30 includes the storage portion 32 and the cover 39. The storage portion 32 is opened and stores the encoder 60. The cover 39 closes the second opening 36 which is in communication with the storage portion 32. By closing the second opening 36 of the storage portion 32, in which the encoder 60 is stored, with the cover 39, it is possible to suppress dust and grime from entering the storage portion 32. Accordingly, the influence of dust and grime on the detecting accuracy of the encoder 60 can be suppressed, and the decrease in detecting accuracy of the encoder 60 can be minimized.

### (Variation of First Embodiment)

In the embodiment described above, the brake 70 with the frictional material 74 provided therein has been described as an example, but the frictional material may also be provided in the brake pad 44. In this case, a part of the brake pad 44 (a part abutting on the brake 70) can be made of a frictional material. Since the frictional material is lighter than metal, the brake pad can be lighter than the brake pad made entirely of metal. Inertia of the brake pad, therefore, can be decreased, and improvement of acceleration/deceleration of the rotating body 42 can be achieved. In addition, with such a structure, the volume of the frictional material is increased, compared to the case when the frictional material is provided in the holding member 76. As a result, the frictional material has a longer life and maintenance can be eased.

### (Second Embodiment)

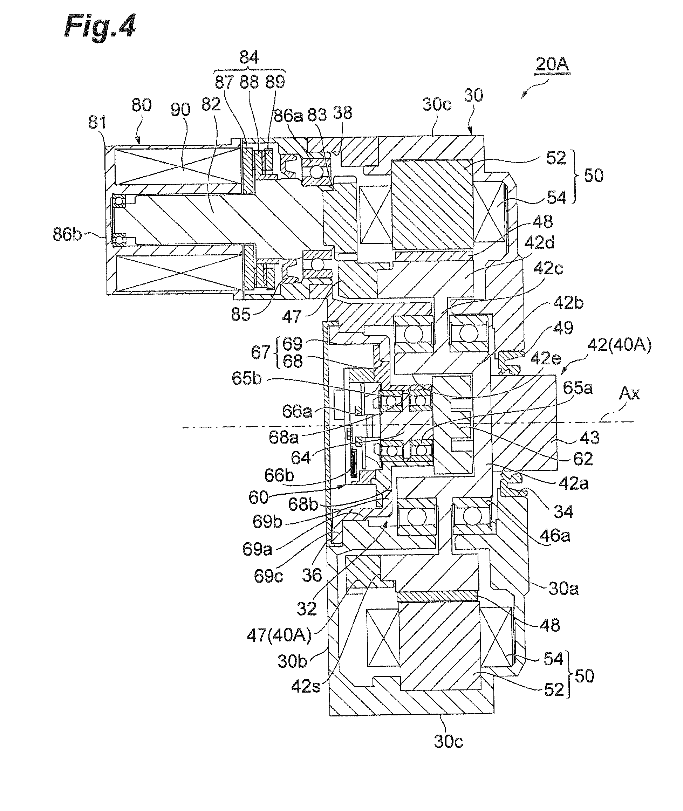

Next, a second embodiment will be described. FIG. 4 is a cross-sectional structure of a motor according to the second embodiment. As illustrated in FIG. 4, a motor 20A includes a casing 30, a rotor 40A, a stator 50, an encoder 60, and a brake 80. The casing 30, the stator 50, and the encoder 60 of the motor 20A according to the second embodiment are in a structure similar to that of the motor 20A according to the first embodiment. Therefore, only a part of the structure that differs from that of the first embodiment will be described in detail below.

The rotor 40A includes a rotating body 42 and a gear (first gear) 47. The gear 47 is provided on the periphery of the rotating body 42. Specifically, the gear 47 is coupled to an end surface 42s of the fourth portion 42d on the side of the second surface 30b. The gear 47 is annular. The gear 47 is arranged coaxially with the output axis Ax.

The brake 80 is a braking device to brake rotation of the rotor 40. The brake 80 projects toward outside from the second surface 30b of the casing 30 along the output axis Ax. The brake 80 is arranged at an eccentric position relative to the output axis Ax. Specifically, the brake 80 is arranged at a third opening 38 of the casing 30. The brake 80 includes a case 81, a shaft 82, a brake gear (second gear) 83, a braking portion 84, and a sealing material 85.

The case 81 stores the shaft 82, the brake gear 83, the braking portion 84, and the sealing material 85. The case 81 is fixed to the casing 30 with a screw or the like. The external shape of the case 81 is, for example, circular. The shape of the case 81 may be set appropriately according to designs.

The shaft 82 is provided rotatably. The shaft 82 is column-shaped. The shaft 82 is configured to be rotatable by annular bearings 86a, 86b that are fixed in the case 81. Specifically, the bearing 86a is arranged at one end portion (on the side where the gear 47 is provided) of the shaft 82. The bearing 86b is arranged at the other end portion of the shaft 82. A spline is provided in a part of the shaft 82.

The brake gear 83 meshes with the gear 47. The brake gear 83 is made of, for example, metal. The brake gear 83 is provided at one end portion of the shaft 82. The brake gear 83 is installed on the shaft 82 with a screw or the like. The brake gear 83 is rotated according to the rotation of the gear 47. An outer diameter of the brake gear 83 is smaller than that of the gear 47. Specifically, the outer diameter of the brake gear 83 is about 1/4 of that of the gear 47. Lubricant is injected to the brake gear 83 and the gear 47.

The braking portion 84 stops rotation of the shaft 82. The braking portion 84 includes a movable portion 87, an engaging portion 88, a fixed portion 89, and a coil 90. In the braking portion 84, the fixed portion 89, the engaging portion 88, the movable portion 87, and the coil 90 are arranged in this order from the tip end side of the shaft 82 in the direction along the output axis Ax.

The movable portion 87 is provided movably in the direction along the output axis Ax (extending direction of the shaft 82). The movable portion 87 is annular. The shaft 82 is inserted in the movable portion 87. Movement of the movable portion 87 is controlled by electromagnetic force of the coil 90.

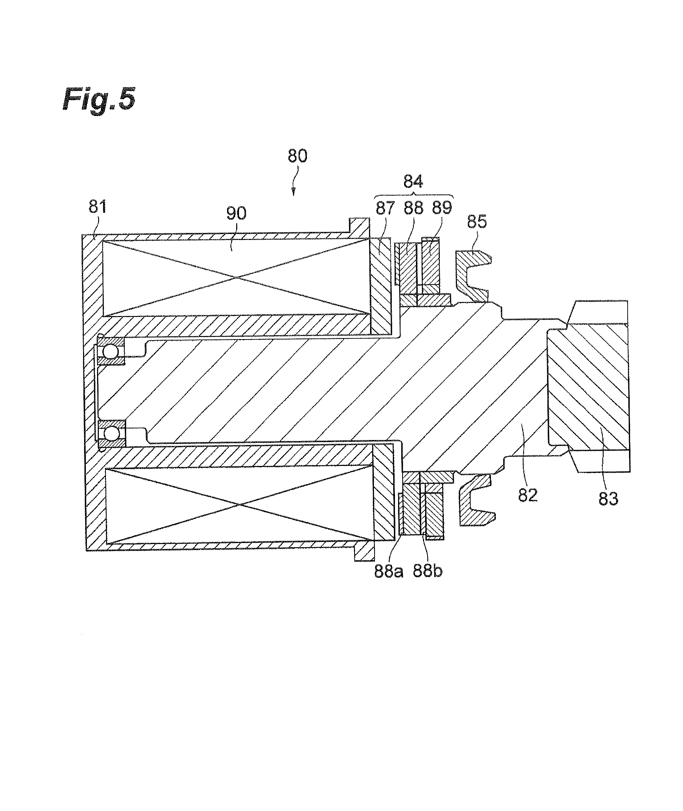

The engaging portion 88 engages with the spline of the shaft 82. The engaging portion 88 is annular. The inner circumference of the engaging portion 88 is in an engaging shape with the spline of the shaft. The engaging portion 88, thus, rotates in synchronism with the shaft 82 and is movable along the extending direction of the shaft 82. Frictional materials 88a, 88b (see FIG. 5) are provided in the engaging portion 88. The frictional material 88a is arranged on the side of the movable portion 87 in the engaging portion 88. The frictional material 88b is arranged on the side of the fixed portion 89 in the engaging portion 88. The frictional materials 88a, 88b are annular.

The fixed portion 89 is fixed on the case 81. The fixed portion 89 is annular. The fixed portion 89 is arranged so that the engaging portion 88 is interposed between the movable portion 87 and the fixed portion 89.

The coil 90 controls the movement of the movable portion 87. The coil 90 is located to surround part of the circumference of the shaft 82. A plurality of energizing members (e.g., coil springs), which are not illustrated, is provided on the side of the movable portion 87 of the coil 90. The energizing members are arranged at predetermined intervals in the circumference direction of the coil 90. While the electric current is supplied, the coil 90 applies electromagnetic force, which opposes the energizing force of the energizing members, to hold the movable portion 87 at a position separated from the engaging portion 88 by drawing the movable portion 87. While the electric current is not supplied, the coil 90 releases the holding of the movable portion 87.

Once the current supply to the coil 90 is stopped, the brake 80 of the above-described structure releases holding of the movable portion 87, as illustrated in FIG. 4, by the coil 90 and moves the movable portion 87 toward the side of the engaging portion 88 by the energizing force of the energizing members. The brake 80 moves the movable portion 87 to grip the engaging portion 88 by the movable portion 87 and the fixed portion 89, to thereby causing the frictional materials 88a, 88b to slidably contact the movable portion 87 and the fixed portion 89, respectively. Thus, the rotor 40, which is in a rotating state, reduces its speed or stops and, at the same time, the rotation of the rotor 40, which is in a stationary state, is restricted.

When the current supply to the coil 90 is started, the brake 80 separates the movable portion 87 from the engaging portion 88 by drawing the movable portion 87 in the coil 90, as illustrated in FIG. 5. As a result, the shaft 82 become rotatable and the brake gear 83 connected to the shaft 82 also becomes rotatable, to thereby cause the rotor 40, which is provided with the gear 47 that meshes with the brake gear 83, to be rotatable.

The sealing material 85 suppresses leakage of the lubricant to the side of the braking portion 84. The sealing material 85 is arranged between the bearing 86a and the fixed portion 89. The sealing material 85 is annular.

As described above, similar to the motor 20 according to the first embodiment, the motor 20A according to the present embodiment can directly detect the rotation of the rotating portion 64 by the encoder 60, without providing a power transmission member, such as a gear, by arranging the rotating portion 64 of the encoder 60 coaxially with the output axis Ax of the rotating body 42. Therefore, the influence of disturbance or the like can be restricted and a detection accuracy of the encoder 60 can be improved. Further, by arranging the brake 70 at a position shifted from the rotating body 42 (offset arrangement), a smaller (thinner) device can be provided in the axial direction, compared to the structure in which the components are arranged on the same axis.

In the present embodiment, the brake 80 stops rotation of the rotating body 42 by stopping rotation of the brake gear 83 that meshes with the gear 47, in other words, by stopping rotation of the shaft 82 to thereby stop the rotating body 42. The outer diameter of the brake gear 83 is smaller than that of the gear 47. If, therefore, the outer diameter of the gear 47 is, for example, n times the outer diameter of the brake gear 83, the brake 80 can stop the rotating body 42 with 1/n of the frictional torque necessary to stop the rotating body 42. Accordingly, the braking portion 84 becomes smaller and the entire size of the brake 80 can be decreased. As a result, the motor 20A can be made smaller.

In the present embodiment, the gear 47 is arranged on the periphery of the rotating body 42, and the brake 80 is arranged at a position corresponding to the periphery. By this structure, the outer diameter of the gear 47 can be increased. Because of this, the outer diameter of the brake gear 83 can be decreased relative to the outer diameter of the gear 47. Therefore, even when the brake 80 becomes smaller, the rotation of the rotating body 42 can be securely stopped. Since the brake 80 is arranged at a position corresponding to the periphery of the brake 80, the brake 80 is arranged biased to the periphery side of the motor 20A. As a result, space is formed in a portion other than the brake 80, and such space can be used for wiring or the like, when the motor 20A is installed on a device.

### (Variation of Second Embodiment)

In the above-described embodiment, the gear 47 and the brake gear 83 made of metal have been described as examples. The gear 47 and the brake gear 83, however, may be made of self-lubricating resin. When the gear 47 and the brake gear 83 are made of metal, it is necessary to inject lubricant between the gear 47 and the brake gear 83, which mesh with each other. Therefore, the sealing material 85 is provided in the motor 20A to prevent external leakage of the lubricant. Since the gear 47 and the brake gear 83 are made of the self-lubricating resin, the injection of the lubricant becomes unnecessary and the sealing material 85 also becomes unnecessary. As a result, the number of constituent parts can be reduced to simplify the structure. As a result, a smaller motor 20A can be achieved, and the manufacturing cost can be reduced. From the point of view of durability, the gear 47 and the brake gear 83 may preferably be made of metal.

In the above-described embodiment, the outer diameter of the brake gear 83 being about 1/4 of that of the gear 47 has been described as an example, but the outer diameters of the brake gear 83 and the gear 47 are not limited thereto. The outer diameters of the brake gear 83 and the gear 47 may be set appropriately according to designs. In short, the outer diameter of the brake gear 83 should be smaller than the outer diameter of the gear 47.

### (Variation)

The present invention is not limited to the above-described embodiments. For example, in the embodiments above, an example of the casing 30 of the motors 20, 20A having a circular outer shape has been described, but the shape of the casing 30 is not limited thereto.

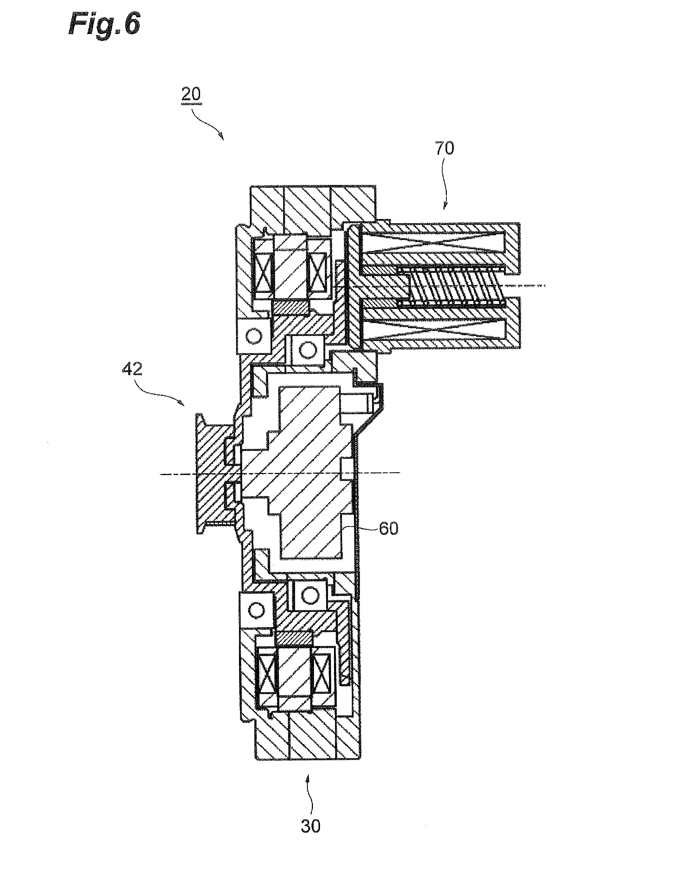

As illustrated in FIG. 6, the encoder 60 may be flat, similar to the casing 30, expanding toward a direction orthogonal to the output axis Ax. Specifically, a length measurement of the encoder 60 in a direction along the output axis Ax may be shorter than a length measurement of the encoder 60 in a direction approximately vertical to the output axis Ax. Since the encoder 60 is a flat shape, the shape of the motor 20 can be flatter.

## Claims

1. An electric rotating machine (20, 20A), comprising:
an electric rotating machine body (40, 50) configured to rotate a rotating body (42) around an axis (Ax);
a rotation detecting device (60) configured to detect rotation of the rotating body (42); and
a braking device (70, 80) configured to stop the rotation of the rotating body (42), wherein
the rotation detecting device (60) includes a rotating portion (64) configured to rotate in association with the rotating body (42), the rotating portion (64) being arranged coaxially with the axis (Ax), and
the braking device (70, 80) is arranged at a position shifted from the axis (Ax) of the rotating body (42).

2. The electric rotating machine (20) according to claim 1, wherein
the rotating body (42) includes a first abutting portion (44) arranged coaxially with the axis (Ax), and
the braking device (70, 80) includes
a second abutting portion (74) being slidably in contact with the first abutting portion (44) to provide frictional force to the first abutting portion (44), and
an driving portion (78, 79) configured to drive the second abutting portion (74).

3. The electric rotating machine (20) according to claim 2, wherein
the first abutting portion (44) is arranged on the periphery of the rotating body (42), and
the braking device (70) is arranged at a position corresponding to the periphery.

4. The electric rotating machine (20A) according to claim 1 or 2, wherein
the rotating body (42) includes a first gear (47) arranged coaxially with the axis (Ax), and
the braking device (80) includes
a second gear (83) meshing with the first gear (47) and having a diameter smaller than that of the first gear (47),
a shaft (82) rotatably supporting the second gear (83), and
a brake portion (84) that stops rotation of the shaft (82).

5. The electric rotating machine (20A) according to claim 4, wherein
the first gear (47) is arranged on the periphery of the rotating body (42), and
the braking device (80) is arranged at a position corresponding to the periphery.

6. The electric rotating machine (20A) according to claim 4 or 5, wherein
both the first gear (47) and the second gear (83) are made of self-lubricating resin.

7. The electric rotating machine (20, 20A) according to any one of claims 1 to 6, wherein
a recess (42e) is provided in the rotating body (42) at a position including the axis (Ax), and
at least part of the rotation detecting device (60) is located in the recess (42e).

8. The electric rotating machine (20, 20A) according to any one of claims 1 to 7, comprising:
a housing (30) holding the electric rotating machine body (40,50), the rotation detecting device (60), and the brake device (70, 80), wherein
the rotation detecting device (60) includes
a connecting portion (62) connecting the rotating portion (64) and the rotating body (42), while being restricted to move toward the rotational direction of the rotating body (42) and allowed to move toward a direction along the axis (Ax), and
a holding portion (67) holding the rotating portion (64), the holding portion (67) being provided removably in the housing (30).

9. The electric rotating machine (20, 20A) according to claim 8, wherein
the housing (30) includes a storage portion (32) storing the rotation detecting device (60) and is opened, and
a lid (39) closing the opening of the storage portion (32).
